# EUROPEAN PATENT APPLICATION

(11) **EP 1 281 994 A1**
(43) Date of publication of application: **05.02.2003**
(21) Application number: 01306521.4
(22) Date of filing: 30.07.2001
(51) Int. Cl.: G02B 6/38

(54) **Transceiver connector**

(71) Applicant: Agilent Technologies, Inc. (a Delaware corporation), Palo Alto, CA 94303 (US)
(72) Inventor: Mitchell, Ian, Ipswich, Suffolk IP6 8HZ (GB)
(74) Representative: Coker, David Graeme

(57) **Abstract**

An optical transceiver module (10) manufactured to industry standard requirements can have an MT-RJ optical connector (12) or an LC (or SG) optical connector (34) (each with differing external dimensions). By fitting a sleeve (16) over the MT-RJ connector (12), the external dimensions of the sleeve are equal to the external dimensions of the LC (or SG) connector (34). Therefore, both the MT-RJ connector (12) and the LC connector (34) fit through similar size holes (26, 24) in a customer panel (22).

## Description

### Field of the Invention

The invention relates, in general, to transceivers and more particularly to optical transceivers, such as those used in telecommunications applications.

### Background to the Invention

A fibre optic transceiver is used for receiving and transmitting light signals in a high speed optical communications network. The fibre optic transceiver may be used as a signal source and signal detector for various applications as determined by a user.

However, there are a number of different mechanical interfaces with the optical transceiver which have been used in the past and have become defacto industry standards. These include the MT-RJ, LC and SG interfaces which provide a mechanical interface to the customer panel and an optical interface to the customer's fibre optic cable. The interfaces are used between the optical transceiver and a customer panel and therefore requires that the customer panel have the provision for all three types of interfaces. Although the LC and SG interfaces require the same size and shape openings in the customer panel, the MT-RJ interface requires a different size and shape opening.

Therefore it is desirable to enable use of different applications requiring different transceiver module mechanical interfaces without the need to provide several separate transceiver modules or a transceiver module with multiple panel openings to accommodate several different application connector interfaces.

### Brief Summary of the Invention

Accordingly, the present invention provides a sleeve for an optical transceiver connector, the sleeve comprising a generally tubular body having internal cross sectional dimensions suitable for close fitting to a first type of optical transceiver connector and external outline similar to a second type of optical transceiver connector, the body being formed of a substantially electrically conductive material.

Preferably, the first type of optical transceiver connector is an MT-RJ connector, and the second type of optical transceiver connector is an LC connector.

The substantially electrically conductive material is preferably conductive plastic.

Alternatively, the substantially electrically conductive material is a metalised plastic material.

Alternatively, the substantially electrically conductive material is a metal.

### Brief Description of the Drawings

An exemplary embodiment of the present invention will now be described with reference to the accompanying drawings, of which:
FIG.1 is a schematic diagram of an optical transceiver module (in an exploded view) constituting an embodiment of the present invention; and
FIG.2 is a schematic diagram of two optical transceiver modules, each having different connectors, but connected through identical openings in a panel using a sleeve according to an embodiment of the present invention.

### Detailed Description of the Drawings

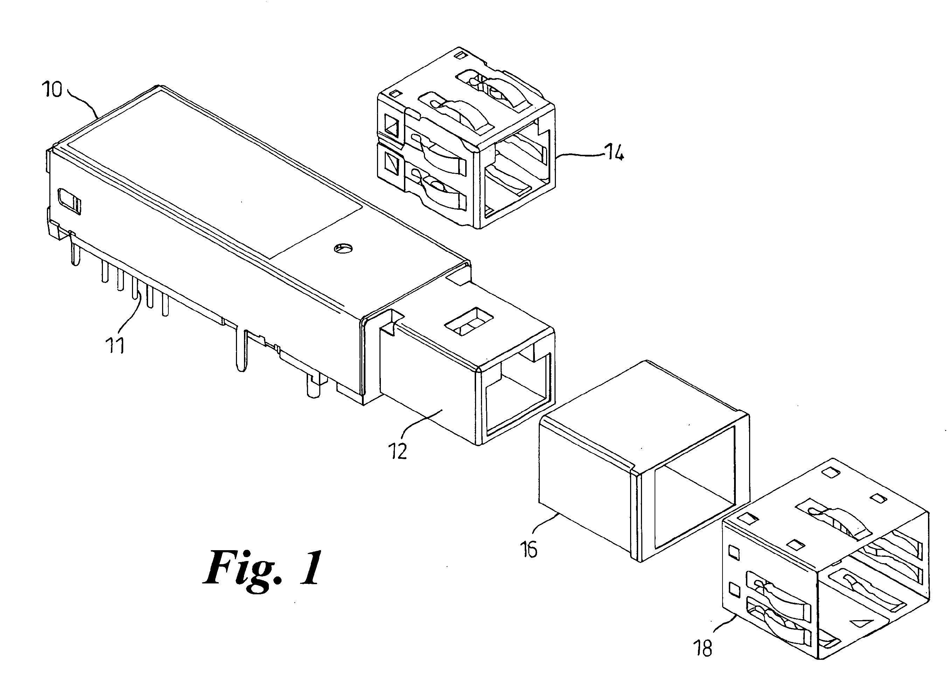

Thus, FIG.1 shows a type of optical transceiver 10 known as a SFF (Small Form Factor) module, the features of which are determined by an industry standard (the SFF Transceiver Multisource Agreement). In particular, the industry standard defines the form of package outline, circuit board layout, pin function (several pins 11 are illustrated in FIG.1) and mechanical interface.

The SFF Transceiver Multisource Agreement defines three optical connector interface options: MT-RJ, LC and SG. The SFF module 10 of FIG.1 is MT-RJ connector interface specific. The MT-RJ compatible module usually has an MT-RJ EMI (Electro-Magnetic Interference) nose shield 14 fitted over the MT-RJ connector 12. However, in the present embodiment the MT-RJ nose shield 14 is removed from the MT-RJ connector 12. The EMI nose shield 14 functions to mitigate and reduce the effect of electro-magnetic interference on the SFF module 10. This effectively reduces the size of the opening in the customer panel, lowering the radiated emissions, and it also reduces the module's susceptibility to external radiation. An MT-RJ to LC sleeve 16, is then fitted over the MT-RJ connector 12 and an LC EMI nose shield 18 is then fitted over the sleeve 16.

In use, the sleeve 16 functions to change the MT-RJ connector 12 into an LC (or equally SG) optical connector interface. An LC (or SG) connector requires a larger panel opening than the MT-RJ connector 12. The LC (or SG) EMI nose shield 18 functions in the same way as the MT-RJ EMI nose shield 14, thus ensuring that a similar EMC performance is maintained when the LC (or SG) connector is used.

The sleeve 16 may be made of a conductive plastic, metalised plastic or metal in order to maintain electrical properties between the MT-RJ connector 12 and the LC (or SG) EMI nose shield 18.

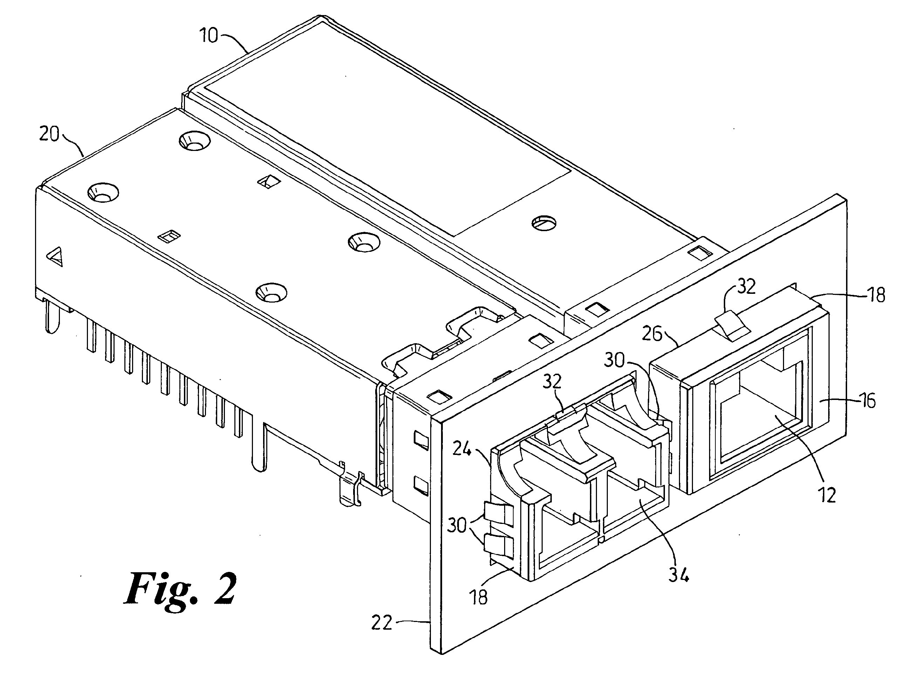

FIG.2 illustrates two optical transceiver modules 10, 20 each having a different optical connector interface. Where the same element is illustrated in FIG.1 and FIG.2, the same reference numeral is used. The SFF module 10 has the MT-RJ to LC sleeve 16 fitted over the MT-RJ connector 12, and the LC (or SG) EMI nose shield 18 fitted over the MT-RJ to LC sleeve 16. The optical transceiver module 20 includes an LC optical connector interface 34 and an LC EMI nose shield 18. A customer panel 22 has two rectangular apertures 24, 26 of identical size and shape, through which optical transceiver modules 20, 10 protrude, respectively. A leaf spring 30, 32 on both of the LC nose shields 18 are engaged with the customer panel 22 and stop the modules 20, 10 from moving position relative to apertures 24, 26

Without sleeve 16 it would be necessary for aperture 26 to be smaller than aperture 24 in order to ensure a close fit between the outer edge of the MT-RJ connector nose shield 14 surrounding the MT-RJ connector 12. In such a scenario, the user would need to know in advance that optical transceiver 10 will be used with applications requiring the MT-RJ connector and that optical transceiver 20 will be used with applications requiring the LC connector. However, it is not always possible for the user to predict future use requirements of the transceivers 20, 10 at the time of installation of the customer panel 22.

Advantageously, the present invention provides a system which gives the user flexibility to utilise applications requiring any one of the three optical connector interface options MT-RJ, LC and SG with a single size aperture in the panel. Further advantage is obtained because the sleeve of the present invention may be deployed by the user without specialist skills or additional equipment.

Whilst the invention has been described above in respect of a particular embodiment, it will be appreciated that the present invention is applicable to any transceiver module which is required to be utilised with more than one connector interface type. Furthermore, it will be appreciated that the above description has been given by way of example only and that a person skilled in the art can make modifications and improvements without departing from the scope of the present invention.

## Claims

1. A sleeve (16) for an optical transceiver connector (12), the sleeve (16) comprising a generally tubular body having internal cross-sectional dimensions suitable for close fitting to a first type of optical transceiver connector (12) and external outline similar to a second type of optical transceiver connector, the body being formed of a substantially electrically conductive material.

2. A sleeve (16) according to claim 1, wherein the first type of optical transceiver connector (12) is an MT-RJ connector.

3. A sleeve (16) according to either claim 1 or claim 2, wherein the second type of optical transceiver connector is an LC connector.

4. A sleeve (16) according to any preceding claim, wherein the substantially electrically conductive material is conductive plastic.

5. A sleeve (16) according to any one of claims 1 to 3, wherein the substantially electrically conductive material is a metalised plastic material.

6. A sleeve (16) according to any one of claims 1 to 3, wherein the substantially electrically conductive material is a metal.
